# EUROPEAN PATENT SPECIFICATION

(11) **EP 0 452 042 B1**
(45) Date of publication and mention of the grant of the patent: **22.06.1994**
(21) Application number: 91302987.2
(22) Date of filing: 04.04.1991
(51) Int. Cl.: B01J 47/02, B01J 49/00

(54) **Ion exchange process**
Ionenaustauschverfahren
Procédé pour l'échange d'ions

(30) Priority: 09.04.1990 GB 9008022; 18.01.1991 GB 9101097
(43) Date of publication of application: 16.10.1991
(73) Proprietor: THE PERMUTIT COMPANY LIMITED, London WIM 9DJ (GB)
(72) Inventor: Farrar, John, South Croydon, Surrey CR2 6JE (GB)
(74) Representative: Jones, Helen Marjorie Meredith

(56) References cited:
- CH-A- 591 882
- DE-A- 2 847 435
- DE-A- 3 900 754
- GB-A- 514 360
- GB-A- 730 068
- GB-A- 1 539 161
- GB-A- 2 085 749
- GB-A- 2 167 970

## Description

The present invention relates to a process for carrying out ion exchange on aqueous liquids, in particular to fixed bed ion exchange having a preliminary filter and to the regeneration and cleaning of those components.

A process of conducting ion exchange on an aqueous liquid consists of a service cycle, in which the aqueous liquid to be subjected to ion exchange is passed through a bed of ion exchange resin beads, or several sequentially arranged beds of different types of beads, to produce a product liquid with the desired characteristics. The service cycle is following a regenerating cycle, which regenerates the ion exchange resin prior to the bed becoming exhausted and thus prior to the ion exchange becoming inadequate. For a deionising apparatus regeneration is by flow through the bed of acid or alkali, for cation or anion exchange resins respectively. A water softener replaces scale-forming ions with non-scale-forming ions such as alkaline metal ions and halide ions, and regeneration is usually by solutions of salts of such ions.

For many types of apparatus regeneration is carried out by flow of regenerating liquid in the same direction through the bed as the service flow. This is termed co-flow regeneration. Thus, the flow may be upwards or downwards through the apparatus. Co-flow regeneration is adequate for water softening apparatus.

For some apparatus it is advantageous for regeneration to be conducted counterflow, that is with the regenerant liquid being passed through the bed in the opposite direction to the service flow. This is particularly advantageous for some deionising apparatus, in particular the type of apparatus sold by the applicant company under the name "Scion" (Trademark), in which the rate of flow of liquids through the bed is higher than most other apparatus of this type and the cycle frequency is higher. In such apparatus the improved regeneration is achieved since the resin at different points in the bed contacts regenerant liquid having a different, optimum, composition. For the best results the resin beads should remain substantially fixed within the bed. For apparatus where the regenerant flow is fast it is therefore necessary to use restraining means to restrain the resin particles fixed in the bed.

One problem which occurs with fixed bed apparatus is that suspended solids in the aqueous liquid to be subjected to ion exchange become trapped within the bed and are not removed during the regeneration so that eventually the beds become blocked. Many types of filters overcome this problem by including provision for periodically removing the resins and washing them in a purpose built vessel. One other way of overcoming this problem is to provide a pre-filter to remove the suspended solids prior to passage of the service flow through the first bed. One type of pre-filter that can be used is a cartridge filter, a simple type of filter. The problem with this type of filter is that the sheet of filter material (for instance paper) must be changed very frequently where the water has a high suspended solids content.

It is known to provide filters consisting of particulate material, usually sand, which can be cleaned by reverse flow, optionally with aeration and/or fluidisation. Examples of such apparatus are given in GB-A-2118452, GB-A-2064350, and many others. The reverse flow cleaning cycle for such beds is generally carried out at a high flow rate, for instance far higher than the flow rate used for regeneration of an ion exchange resin bed.

DE-A-2847435 relates to a selective ion exchange process in which regeneration of two ion exchange resin beds is combined. A filter bed is shown for removing mechanical impurities prior to water for purification entering the ion exhange beds. Cleaning of the filter is effected separately and independently from regeneration of the ion exchange resin.

CH-A-591882 relates to an ion exchange apparatus which comprises an ion exchange bed and a filter bed. The filter bed comprises filter material having a density below that of water. In a service cycle impure water flows upwards through the apparatus so that the liquid passes through the filter bed and then through the bed of ion exchange material. In a regernation cycle, the regeneration liquid for the ion exchange resin can be in the opposite direction of flow. It is also described that the regeneration liquid may also be used to clean the filter material. However, this system is problematical because any appreciable change in upward flow rate would disturb the filter beds, leading to migration of impurity which would break through and be carried over with the purified water.

In GB-A-1228366, an ion exchange apparatus is described, in which in service flow the liquid flows downwards through the bed and the bed is regenerated by counterflow of regenerant liquid, upwards through the bed. The bed is expanded during regeneration. In one embodiment of the apparatus a layer of inert resin beads is positioned on top of the ion exchange beads, in such a quantity that the inert beads surround the regenerant liquid collector throughout the regenerating cycle, to prevent loss of ion exchange beads through the collector, as well as ensuring uniformity of flow of regenerant liquid through the bed. It is suggested that the ion exchange resin beads may collect suspended matter and the removal of this is carried out by occasional backwashing of the entire bed, during which process the bed is fluidised. Regeneration by regenerant liquid is carried out in an entirely separate operation with lower flow rates of liquid through the bed in order to prevent fluidisation. Furthermore the inert resin beads preferably have a density of less than 1 so that during service flow they float to the top of the vessel, which may be above the raw water inlet, so that the inert resin cannot act as a filter during service flow.

A new process according to the invention for ion exchange comprises a service cycle and a regenerating and cleaning cycle, and aqueous liquid to be subjected to ion exchange is passed through a filter and then through a bed of ion exchange resin during the service cycle and the bed of ion exchange resin is then counterflow regenerated during the regenerating and cleaning cycle by flow through the bed of a regenerating liquid and the process is characterised in that the filter comprises a bed of particulate material comprising sand, manganese green sand, anthracite or garnet through which the aqueous liquid is passed in a downward direction during the service cycle and in that the filter is cleaned during the regenerating and cleaning cycle by upflow through the filter bed of a cleaning liquid which comprises regenerating liquid. Preferably, the aqueous liquid to be subjected to ion exchange is passed through the bed of ion exchange resin in the downward direction during the service cycle and the regenerating liquid is passed through the ion exchange resin in the upward direction during the regenerating and cleaning cycle.

In the process the cleaning liquid for the particulate filter bed can consist essentially only of the regenerating liquid or the regenerating liquid may be supplemented by additional liquid for instance water. Furthermore the cleaning of the filter bed may be accompanied by an air scour, to increase the agitation of the granular material during the cleaning stage. It is usual for substantially all of the regenerating liquid to be used in the cleaning liquid, although in some circumstances a portion only of the regenerating liquid may be used for the cleaning of the filter.

The process is of most benefit for use with apparatus comprising a fixed bed of ion-exchange resin, since it is this type of bed which suffers most damage from suspended particles in the influent liquid. In the process therefore the ion-exchange resin is usually in a fixed bed.

The filter can be provided in the same vessel as the ion exchange resin, or more usually, may be in a separate vessel. It is in particular advantageous for separate vessels to be used when the bed of ion exchange resin is provided in a glass fibre (or other reinforcement) reinforced resin vessel since the provision of a suitable spacer for separating the beds in such a vessel can be difficult, as the inlet and outlet openings are smaller than the vessel diameter. Typically, suitable vessels are made from plastics materials such as polyvinyl ester or polypropylene. When the vessel comprises reinforced plastic, preferably there is also a liner comprising for example polypropylene. Preferably, ion exchange resin and filter bed are in separate vessels of the same size as this will help to reduce manufacturing costs. Where the filter is in a separate vessel, and where the cleaning liquid comprises all of the regenerant liquid, there is no need to include a valve in the line between the filter vessel and the ion-exchange vessel to which it is connected. This is of course highly advantageous.

The process of the invention is of most benefit for a deionising process, although may be of some value for a water-softening process. It may also be of benefit where organic scavenger units are being used.

The particulate material of the filter bed may be any of those conventionally used in water treatment provided it has a density greater than that of water and it is compatible with the cleaning liquid. Preferably the density of the material is from 1.4 x 10³ to 4.3 x 10³ kg/m³ and most preferably it is 2.2 x 10³ kg/m³ or above. The material may be chemically substantially inert and is often a simple sand filter. Preferably, the particulate material comprises material other than ion exchange resin. In some instances it may be useful to use a bed of activated carbon, for instance where the influent water contains chlorine which needs to be removed. Alternatively the particulate material may comprise for example, anthracite, garnet or manganese green sand. Manganese green sand catalyses removal of dissolved iron although it is not suitable where the cleaning liquid is acidic.

The granular material may comprise or consist of an ion exchange resin having density above 1 x 10³ kg/m³, for instance which would subject the influent water to an initial ion exchange step. For instance the ion exchange resin for the filter bed may be a strong acid cation resin or may comprise a mixed or weak acid cation resin. Any of these resins optionally being present in combination with sand or any of the other above-mentioned granular materials.

When two or more different components are present in the filter bed they preferably have substantially different densities so that they return to separate levels following the cleaning step.

Preferably there is at least 20% difference between the two densities, most preferably at least 30%.

The filter is generally a fairly shallow bed filter, for instance being less than 1 m deep, preferably less than 0.75 m deep, for instance around 0.5 m deep. The area of the filter is suitably around 0.02 to 10 m², for instance in the range 0.1 to 1.5 m².

In additon to the filter bed of the particulate filter material, there may also be a bed of granular material comprising or consisting of another ion exchange resin having density below 1 x 10³ kg/m³, again this could subject the influent water to an initial ion-exchange step. For instance the ion exchange resin for the filter may be a strong acid cation resin or may comprise a weak acid cation resin.

In one preferred arrangement, the filter bed is in a separate vessel from the ion exchange resin and the vessel is optionally sub-divided to comprise a lower chamber and an upper chamber. The filter bed is positioned in the lower chamber and in the upper chamber is an additional bed of particulate material, having a density below 1 x 10³ kg/m³, preferably inert resin beads. During the regenerating cycle, regenerant can flow through the filter bed and subsequently through the resin bed in the upper chamber or it can be removed from the vessel for example, prior to flowing through the upper chamber, for example via a collector-distributor positioned between the two chambers.

When the filter bed is provided in a separate filter vessel, the amount of free space (excluding void volume in the beds themselves) in the vessel is preferably below 40% of the internal volume of the vessel, more preferably below 30% and most preferably below 20%. Having a low volume of free space is advantageous because it reduces the free water volume that has to be displaced and therefore a smaller volume of rinse water is required in the process.

Provision of an additional bed of granular material having density below 1 x 10³ kg/m³ is beneficial for reducing the amount of free space in a filter vessel. In particular this enhances the efficiency when the ion exchange resin and filter beds are in separate vessels of the same size.

The process is of particular value where the regenerating/cleaning liquid is an acid, since the use of an acid as the cleaner aids in the removal of dirt from the filter partly through its chemical action and partly through the improved fluidisation achieved by virtue of the higher density of the acidic solution. The ion-exchange resin which is regenerated in the process is thus preferably a cation exchange resin of a deioniser and may be a weak or a strong acid cation-exchange resin but is preferably a strong acid resin.

The process is based on the realisation that in the relatively novel type of ion-exchange apparatus, in particular deionising apparatus, which use high service and regenerant flow rates, the rate of flow of the regenerating liquid is sufficiently high to be utilisable as the backwashing flow for cleaning the filter bed. Usually the process is carried out with service flow rates of at least 15, preferably at least 20 and often more than 40 or even 60, although usually less than 100 m³ liquid per m² bed area per hour. For such processes the regenerant flow is preferably at least 4, more preferably at least 10 and often at least 15 or even more than 20 up to 80 m³/m²/hour although usually less than 50 or less than 30 or 25 m³/m² hour. The rate of flow of cleaning liquid through the filter bed is usually of the same order as the rate of flow of regenerant liquid through the ion exchange bed, although may be higher or lower depending on the relative sizes of the filter bed and ion exchange bed. Usually the beds are of approximately equal area. The rate of flow of cleaning liquid may be varied, either by providing an additional flow of liquid, usually water, through the bed in conjunction with the regenerant liquid, or by removing some of the regenerant liquid from the flow prior to entry to the filter bed. The rate of flow of cleaning liquid through the filter bed is in general terms sufficient to expand or fluidise the bed.

The use of the regenerating liquid as the cleaning liquid is a very efficient use of chemicals, liquid and apparatus as it minimises waste water and avoids the necessity for separate back wash pumps and tanks for the backwashing liquid as well as minimising the numbers of valves required for the apparatus.

In some instances for example, when the clarified liquid requires a very high degree of purity, or when the aqueous liquid for purification is particularly high in suspended solids or has a high content of chlorine such as from 1mg/ℓ to 10mg/ℓ, in accordance with a further embodiment of the invention, the process additionally comprises further polishing the liquid for purification prior to its entry into the ion exchange bed. This embodiment is preferred in the case of water having a relatively high chlorine content because chlorine will damage anion exchange resin by oxidising the resin cross-links causing physical weakening of the resin.

In accordance with this embodiment, the filter bed and ion exchange resin are provided in separate vessels and a filter cartridge is additionally provided. Thus, aqueous liquid to be subjected to ion exchange is passed through a filter followed by a filter cartridge prior to entry into the bed of ion exchange resin during the service cycle. During the regenerating and cleaning cycle, when the ion exchange resin is regenerated by flow of regenerating liquid through the bed in the opposite direction (counterflow), which also cleans the filter by upflow through the filter, it is important that the regenerant does not flow through the cartridge filter in the counterflow direction. Therefore if the regenerant from the ion exchange bed is required to flow substantially continuously from the top of the ion exchange bed to the filter, the cartridge filter must be separated from the flow. This can be achieved by providing 2 non-return valves on the supply means to the cartridge filter such that the influent water for purification is directed through the cartridge filter and the regenerating liquid is directed through a by-pass and is prevented from flowing through the cartridge filter.

The cartridge filter is generally a paper cartridge filter although any other suitable cartridge filter, for example, carbon cartridge filters can be used.

When a cartridge filter is used it is particularly important that no acidic regenerating liquid flows back into the cartridge filter because these will adsorb onto the filter and elute off into the service flow.

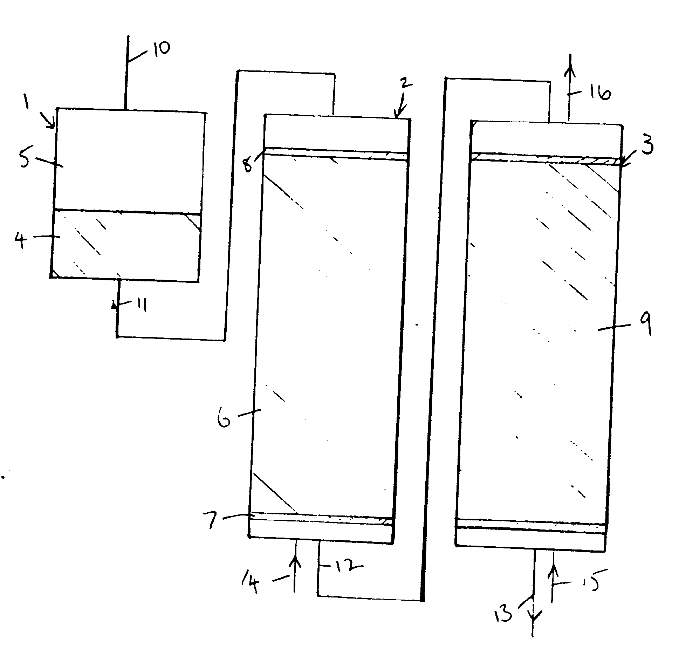

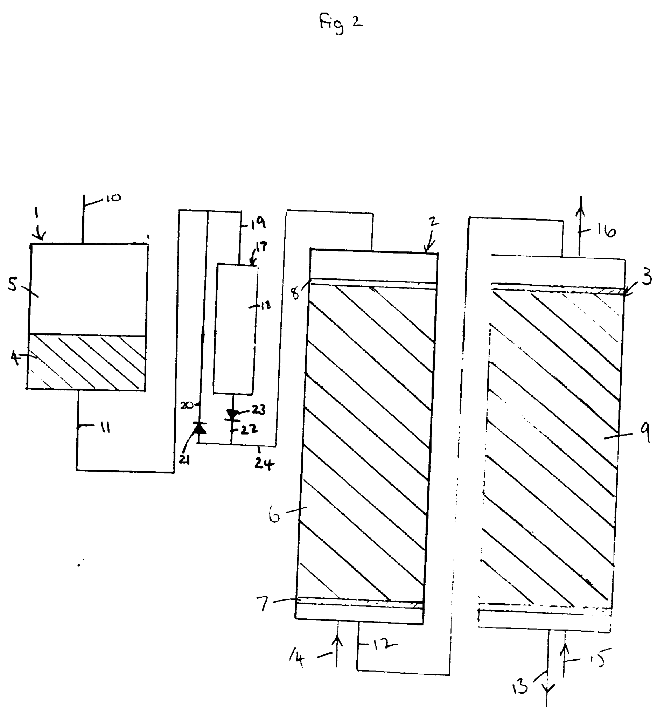

The invention is now described with reference to Figures 1 and 2.

Figure 1 illustrates a preferred embodiment of the invention.

Figure 2 illusrates an apparatus for the process, incorporating the cartridge filter.

Figure 3 illustrates a preferred filter vessel arrangement for use in the process.

As shown in Figure 1, the apparatus consists of a filter vessel 1, a cation resin vessel 2 and an anion vessel 3. In the filter vessel 1 is a bed of sand 4. There is free space 5 above the bed 4 into which the bed can expand during backwashing. In the cation vessel 2 is a fixed bed 6 of cation-exchange resin, held in place by top and bottom plates 7 and 8. Alternatively the resin may substantially fill the entire vessel and may be prevented from escaping from the vessel by the distributor and collector components at the top and bottom of the vessel. The vessel may for instance be formed of metal, or, preferably reinforced resin, preferably glass-fibre reinforced resin of the type used in the applicant's Scion apparatus. In anion vessel 3 is a bed 9 of anion-exchange resin, packed in the vessel in a similar manner as the cation resin.

During service flow influent impure water flows through line 10 downwards into the filter vessel 1, through the bed which removes suspended dirt and out through line 11. It is subsequently passed downwards through bed 6 in vessel 2 for cation exchange and is then passed through line 12 downwards into the anion exchange vessel 3 and through the bed 9 and out through line 13 at the base of that vessel.

When the beds are exhausted they are regenerated, preferably simultaneously, by counterflow regeneration. The cation bed 6 is regenerated by flow of a regenerant liquid through line 14 upwards through the bed and out via line 11 into the filter vessel 1. The bed 4 is expanded and/or fluidised by the flow of cleaning liquid, which in this case consists essentially only of the regenerant liquid, all of the regenerant liquid being used for the cleaning operation. The cleaning acts to remove the solids which have been filtered out of the influent water and the cleaning liquid with removed solids is removed from the vessel 1 via line 10, from which it is led to waste, usually after treatment to remove contaminants.

Simultaneously with the regeneration of the cation resin 6, the anion resin 9 in vessel 3 is regenerated by flow of an alkali through line 15 upwards through the bed 9 and out of the vessel through line 16.

In the apparatus shown it is preferred for service flow to be at a rate of the order of 80 m³/m² hour although rates in the range 20-80 m³/m² hour may be used. The regenerating flow is preferably 20-24 m³/m² hour in the ion exchange resin bed and in the filter bed. Sometimes the rate may be as low as 4 or 5 m³/m² hour. The use of acid as the regenerant and cleaning liquid is advantageous since it has a higher density than pure water and thus effects fluidisation of the filter bed at lower rates.

As can be seen in the drawing, there is no valve in the line between the filter vessel 1 and ion exchange vessel 2.

The drawing of figure 2 shows the same apparatus but with the additional cartridge filter 17. During service flow influent impure water flows through line 10 downwards into the filter vessel 1, through the bed and out through line 11. It then passes along line 11 into line 19 and downwards into and through the cartridge filter 17. It is prevented from passing through line 20 by one way valve 21 which enables upflow only along line 20. Water that has passed through filter 17 flows out of the cartridge filter along line 22 through one way valve 23 which enables downflow only along line 22 and into line 24. Line 24 then leads the water into cation resin vessel 2 and the service flow proceeds on through vessel 3 in accordance with that shown in figure 1.

When the beds are exhausted they are regenerated by counterflow regeneration. The cation bed 6 is regenerated as described with reference to figure 1 and after leaving the top of vessel 2, the regenerant flows through line 24 and through one way valve 21 before passing along line 20 and via line 11 into filter vessel 1, thus by-passing cartridge filter 17.

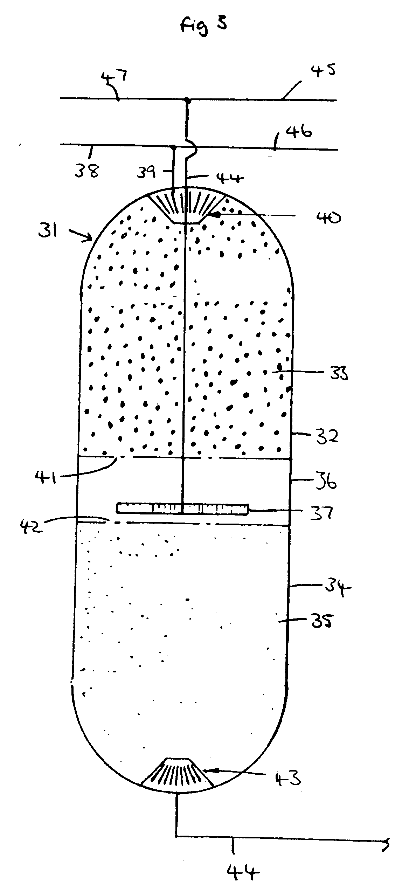

Figure 3 illustrates a preferred filter vessel arrangement in which the filter vessel 31 comprises an upper chamber 32 comprising a bed 33 of inert, ion-exchange resin beads, having a density of below 1 x 10³kg/m³ and a lower chamber 34 comprising a bed 35 of particulate filter material having a density greater than 1 x 10³ kg/m³, generally sand. Intermediate chamber 36 comprises mid-collector distributor 37.

During the service cycle, aqueous liquid for ion exchange enters the filter vessel 31 along line 38 and via line 39 and strainer 40, which ensures good distribution of the liquid into the bed 33. Aqueous liquid flows through bed 33 and leaves upper chamber 32 through orifices 41 leading to intermediate chamber 36. It then flows through orifices 42 into lower chamber 34 comprising the bed of filter material 35, passes through the filter bed 35 and exits the filter through strainer 43 and along line 44.

During the regeneration cycle, regenerant enters the lower chamber 34 along line 44 and via strainer 43 which ensures good distribution of the regenerant into filter bed 35. The regenerant then flows via orifices 42 into intermediate chamber 36. Regenerant can be removed from vessel 31 either via mid-collector distributor 37 and lines 44 and 45 or, via lines 39 and 46 after flowing through orifices 41 and passing through the bed 33.

Optionally, mid-collector-distributor 37 can also provide an air scour with air inlet along line 47 and air outlet through outlet line 46.

Optionally, a second mid-collector-distributor could be added within the bed of inert resin beads 33 to ensure cleaning of this bed, preferably including air scouring.

## Claims

1. A process for ion exchange comprising a service cycle and a regenerating and cleaning cycle, in which aqueous liquid to be subjected to ion exchange is passed through a filter (4) and then through a bed of ion exchange resin (6) during the service cycle and the bed of ion exchange resin is then counterflow regenerated during the regenerating and cleaning cycle by a flow through the bed (6) of a regenerating liquid and the process is characterised in that the filter (4)comprises a bed of particulate material comprising sand, manganese green sand, anthracite or garnet through which the aqueous liquid is passed in a downward direction during the service cycle and in that the filter is cleaned during the regenerating and cleaning cycle by upflow through the filter bed of a cleaning liquid which comprises regenerating liquid.

2. A process according to claim 1 in which the aqueous liquid to be subjected to ion exchange is passed through the bed of ion exchange resin (6) in the downward direction during the service cycle and the regenerating liquid is passed through the ion exchange resin in the upward direction during the regenerating and cleaning cycle.

3. A process according to any preceding claim in which the cleaning liquid for the particulate filter bed (4) consists essentially only of the regenerating liquid.

4. A process according to any preceding claim in which substantially all the regenerating liquid passes upwardly through the filter bed in the regenerating and cleaning cycle.

5. A process according to any preceding claim in which the process is for deionising the aqueous liquid and the ion exchange resin comprises a bed of anion resin (9) and a bed of cation resin (6).

6. A process according to any preceding claim in which the aqueous liquid flows through the ion exchange resin at a rate of at least 20 m³/m²/hour, preferably at least 40 m³/m²/hour and most preferably at least 60 m³/m²/hour and below 100 m³/m²/hour.

7. A process according to any preceding claim in which the flow rate of the regenerant is at least 10 m³/m²/hour, preferably above 15 and up to 80m³/m²/hour.

8. A process according to any preceding claim in which the filter bed (4) is additionally cleaned by a counterflow of air simultaneously with the counterflow of cleaning liquid for all or a part of the regenerating and cleaning cycle.

9. A process according to any preceding claim in which the filter bed (4) is in the same vessel as the ion exchange resin.

10. A process according to any preceding claim in which the particulate material of the filter bed has a density of from 1.4 x 10³ to 4.3 x 10³ kg/m³.

11. A process according to any preceding claim in which the particulate material of the filter bed comprises sand.

12. A process according to any preceding claim in which the particulate material of the filter bed comprises two or more different components which have densities with a difference of at least 20%, the second component preferably being ion exchange resin which is a strong acid cation resin or a weak acid cation resin.

13. A process according to any preceding claim in which the filter bed has a depth less than 1m deep, preferably less than 0.75m deep, and the area of the filter is from 0.02 to 10 m², preferably from 0.1 to 1.5 m².

14. A process according to any preceding claim in which, in the service cycle aqueous liquid to be subjected to ion exchange is passed in one direction, through a filter and subsequently through a cartridge filter and then through the bed of ion exchange resin.

## Patentansprüche

1. Ionenaustauschverfahren, umfassend einen Arbeitszyklus und einen Regenerierungs- und Reinigungszyklus, worin wäßrige Flüssigkeit, die dem Ionenaustausch unterzogen werden soll, während des Arbeitszyklus durch ein Filter (4) und dann durch ein Bett aus Ionenaustauschharz (6) geleitet wird und das Bett aus Ionenaustauschharz dann während des Regenerierungs- und Reinigungszyklus durch Durchleiten einer Regenerierungsflüssigkeit durch das Bett (6) im Gegenstrom regeneriert wird, und das Verfahren dadurch gekennzeichnet ist, daß das Filter (4) ein Bett aus teilchenförmigem Material umfassend Sand, Mangangrünsand, Anthrazit oder Granat umfaßt, durch das die Flüssigkeit während des Arbeitszyklus von oben nach unten geleitet wird und daß das Filter während des Regenerierungs- und Reinigungszyklus durch den Aufwärtsfluß einer Regenerierungsflüssigkeit umfassenden Reinigungsflüssigkeit durch das Filterbett gereinigt wird.

2. Verfahren nach Anspruch 1, worin die wäßrige Flüssigkeit, die dem Ionenaustausch unterzogen werden soll, während des Arbeitszyklus von oben nach unten durch das Bett aus Ionenaustauschharz (6) geleitet wird und die Regenerierungsflüssigkeit während des Regenerierungs- und Reinigungszyklus von unten nach oben durch das Ionenaustauschharz geleitet wird.

3. Verfahren nach irgendeinem vorangehenden Anspruch, worin die Reinigungsflüssigkeit für das teilchenförmige Filterbett (4) im wesentlichen nur aus der Regenerierungsflüssigkeit besteht.

4. Verfahren nach irgendeinem vorangehenden Anspruch, worin praktisch die gesamte Regenerierungsflüssigkeit in dem Regenerierungs- und Reinigungszyklus von unten nach oben durch das Filterbett fließt.

5. Verfahren nach irgendeinem vorangehenden Anspruch, worin das Verfahren der Entionisierung der wäßrigen Flüssigkeit dient und das Ionenaustauschharz ein Bett aus Anionenaustauschharz (9) und ein Bett aus Kationenaustauschharz (6) umfaßt.

6. Verfahren nach irgendeinem vorangehenden Anspruch, worin die wäßrige Flüssigkeit mit einer Geschwindigkeit von mindestens 20 m³/m²/Stunde, vorzugsweise mindestens 40 m³/m²/Stunde und am meisten bevorzugt mindestens 60 m³/m²/Stunde, und mit weniger als 100 m³/m²/Stunde durch das Ionenaustauschharz fließt.

7. Verfahren nach irgendeinem vorangehenden Anspruch, worin die Fließgeschwindigkeit des Regenerierungsmittels mindestens 10 m³/m²/Stunde, vorzugsweise mehr als 15 und bis zu 80 m³/m²/Stunde beträgt.

8. Verfahren nach irgendeinem vorangehenden Anspruch, worin das Filterbett (4) zusätzlich durch einen Gegenstrom von Luft gleichzeitig mit dem Gegenstrom von Reinigungsflüssigkeit während des ganzen oder eines Teils des Regenerierungs- und Reinigungszyklus gereinigt wird.

9. Verfahren nach irgendeinem vorangehenden Anspruch, worin sich das Filterbett (4) in dem gleichen Gefäß wie das Ionenaustauschharz befindet.

10. Verfahren nach irgendeinem vorangehenden Anspruch, worin das teilchenförmige Material des Filterbetts eine Dichte von 1,4 x 10³ bis 4,3 x 10³ kg/m³ aufweist.

11. Verfahren nach irgendeinem vorangehenden Anspruch, worin das teilchenförmige Material des Filterbetts Sand umfaßt.

12. Verfahren nach irgendeinem vorangehenden Anspruch, worin das teilchenförmige Material des Filterbetts zwei oder mehr Komponenten umfaßt, die Dichten mit einer Differenz von mindestens 20% aufweisen, wobei es sich bei der zweiten Komponente vorzugsweise um ein Ionenaustauschharz handelt, das ein stark saures Kationenaustauschharz oder ein schwach saures Kationenaustauschharz ist.

13. Verfahren nach irgendeinem vorangehenden Anspruch, worin das Filterbett eine Tiefe von weniger als 1 m, vorzugsweise weniger als 0,75 m, aufweist und die Fläche des Filters 0,02 bis 10 m², vorzugsweise 0,1 bis 1,5 m², beträgt.

14. Verfahren nach irgendeinem vorangehenden Anspruch, worin wäßrige Flüssigkeit, die dem Ionenaustausch unterzogen werden soll, in dem Arbeitszyklus in einer Richtung durch ein Filter und anschließend durch ein Patronenfilter und dann durch das Bett aus Ionenaustauschharz geleitet wird.

## Revendications

1. Procédé d'échange d'ions comprenant un cycle de fonctionnement et un cycle de régénération et nettoyage, dans lequel on fait passer un liquide aqueux à soumettre à un échange d'ions à travers un filtre (4), puis à travers un lit de résine échangeuse d'ions (6) durant le cycle de fonctionnement et on régénère ensuite à contre-courant le lit de résine échangeuse d'ions durant le cycle de régénération et nettoyage grâce à un courant, à travers le lit (6), d'un liquide régénérateur, caractérisé en ce que le filtre (4) comprend un lit de matériau particulaire comprenant sable, sable vert de manganèse, anthracite ou grenat, à travers lequel on fait passer le liquide aqueux dans une direction descendante durant le cycle de fonctionnement et en ce que le filtre est nettoyé durant le cycle de régénération et nettoyage par courant ascendant à travers le lit filtrant d'un liquide de nettoyage qui comprend du liquide régénérateur.

2. Procédé selon la revendication 1, dans lequel on fait passer le liquide aqueux à soumettre à un échange d'ions à travers le lit de résine échangeuse d'ions (6) dans la direction descendante durant le cycle de fonctionnement et on fait passer le liquide régénérateur à travers la résine échangeuse d'ions dans la direction ascendante durant le cycle de régénération et nettoyage.

3. Procédé selon l'une quelconque des revendications précédentes, dans lequel le liquide de nettoyage destiné au lit filtrant particulaire (4) consiste essentiellement uniquement en liquide régénérateur.

4. Procédé selon l'une quelconque des revendications précédentes, dans lequel pratiquement tout le liquide régénérateur passe dans la direction ascendante à travers le lit filtrant au cours du cycle de régénération et nettoyage.

5. Procédé selon l'une quelconque des revendications précédentes, dans lequel le procédé est destiné à la désionisation du liquide aqueux et la résine échangeuse d'ions comprend un lit de résine d'anions (9) et un lit de résine de cations (6).

6. Procédé selon l'une quelconque des revendications précédentes, dans lequel le liquide aqueux s'écoule à travers la résine échangeuse d'ions à un débit d'au moins 20 m³/m²/h, de préférence d'au moins 40 m³/m²/h, mieux encore d'au moins 60 m³/m²/h, mais inférieur à 100 m³/m²/h.

7. Procédé selon l'une quelconque des revendications précédentes, dans lequel le débit de régénérant est d'au moins 10 m³/m²/h, de préférence supérieur à 15 m³/m²/h et égal au maximum à 80 m³/m²/h.

8. Procédé selon l'une quelconque des revendications précédentes, dans lequel le lit filtrant (4) est en outre nettoyé par de l'air à contre-courant, en même temps que par du liquide de nettoyage à contre-courant pendant tout ou partie du cycle de régénération et nettoyage.

9. Procédé selon l'une quelconque des revendications précédentes, dans lequel le lit filtrant (4) se trouve dans le même récipient que la résine échangeuse d'ions.

10. Procédé selon l'une quelconque des revendications précédentes, dans lequel le matériau particulaire du lit filtrant a une densité comprise entre 1,4 x 10³ et 4,3 x 10³ kg/m³.

11. Procédé selon l'une quelconque des revendications précédentes, dans lequel le matériau particulaire du lit filtrant comprend du sable.

12. Procédé selon l'une quelconque des revendications précédentes, dans lequel le matériau particulaire du lit filtrant comprend deux composants différents ou plus ayant des densités présentant une différence d'au moins 20 %, le second composant étant de préférence une résine échangeuse d'ions qui est une résine de cations fortement acide ou une résine de cations faiblement acide.

13. Procédé selon l'une quelconque des revendications précédentes, dans lequel le lit filtrant a une profondeur inférieure à 1 m, de préférence inférieure à 0,75 m, et l'aire du filtre est comprise entre 0,02 et 10 m², de préférence entre 0,1 et 1,5 m².

14. Procédé selon l'une quelconque des revendications précédentes, dans lequel, au cours du cycle de fonctionnement, on fait passer un liquide aqueux à soumettre à l'échange d'ions dans une direction, à travers un filtre, puis à travers une cartouche filtrante et ensuite à travers le lit de résine échangeuse d'ions.
